Europäisches Patentamt

European Patent Office

Office européen des brevets

(19)

(11) Numéro de publication : **0 310 474 B1**

# (12) FASCICULE DE BREVET EUROPEEN

(45) Date de publication du fascicule du brevet :
29.04.92 Bulletin 92/18

(51) Int. Cl.$^5$ : **H02N 1/08**

(21) Numéro de dépôt : **88402293.0**

(22) Date de dépôt : **12.09.88**

(54) **Dispositif mécanique d'assemblage avec autocentrage de modules d'appareillage électrique.**

(30) Priorité : **02.10.87 FR 8713761**

(43) Date de publication de la demande :
**05.04.89 Bulletin 89/14**

(45) Mention de la délivrance du brevet :
**29.04.92 Bulletin 92/18**

(84) Etats contractants désignés :
**DE ES GB IT**

(56) Documents cités :
**FR-A- 2 499 308**
**FR-A- 2 550 907**
**FR-A- 2 562 170**

(73) Titulaire : **MERLIN GERIN**
**Rue Henri Tarze**
**F-38050 Grenoble Cédex (FR)**

(72) Inventeur : **Lazareth, Michel**
**Merlin Gerin Sce. Brevets**
**F-38050 Grenoble Cedex (FR)**

(74) Mandataire : **Kern, Paul et al**
**Merlin Gerin Sce. Brevets 20, rue Henri Tarze**
**F-38050 Grenoble Cédex (FR)**

## Description

L'invention est relative à un dispositif mécanique d'assemblage d'une pluralité de modules accolés, à boîtiers isolants moulés de logement d'appareillage électrique, comprenant une pièce de liaison encliquetable en matériau isolant pouvant être insérée dans une glissière de deux boîtiers accolés, pour coopérer par accrochage avec des saillies fixes de retenue, ladite pièce chevauchant en position encliquetée l'interface des deux boîtiers.

Un tel dispositif est décrit dans le brevet français 2550907 de la demanderesse. La pièce de liaison est constituée par un coulisseau mobile logé dans une rainure en forme de glissière échelonnée transversalement sur toute la largeur du boîtier. La profondeur de la glissière est réduite, et le coulisseau est mis en place par glissement dans la direction d'accolement des modules. La tenue mécanique de ce dispositif est limitée, et l'emplacement nécessaire sur la face latérale étroite augmente l'encombrement des boîtiers.

Le document FR-2.499.308 décrit un étrier de liaison en fil métallique élastique chevauchant l'interface des deux modules à assembler. Les extrémités de l'étrier sont agencées en oeillets, chaque oeillet étant logé dans une rainure distincte disposée dans la partie centrale du boîtier associé. Il subsiste un rebord entre la rainure et chaque grande face latérale du boîtier. La mise en place de l'étrier autorise un maintien élastique des deux rebords conjugués sans assurer un centrage et un verrouillage positif des deux modules.

Le document FR-2.562.170 se rapporte à un dispositif d'assemblage mécanique d'éléments modulaires comprenant une pièce de liaison amovible susceptible de s'engager dans des évidements conjugués disposés en regard l'un de l'autre lors du rapprochement des deux modules. La pièce est dépourvue de pattes de verrouillage positif, et peut être démontée par l'utilisateur.

L'objet de l'invention consiste à améliorer la tenue mécanique de modules d'appareillage électrique.

Le dispositif mécanique d'assemblage selon l'invention est caractérisé en ce que le boîtier de chaque module comporte une paire d'encoches symétriques pour déboucher sur les grandes faces latérales opposées du boîtier, l'accolement de deux modules provoquant la venue en regard au niveau de l'interface de deux encoches conjuguées pour former une rainure commune constituant ladite glissière, et que la pièce de liaison est agencée en cavalier ayant un talon de centrage susceptible de s'intégrer dans la rainure, et une paire de pattes de fixation traversant ladite rainure pour verrouiller positivement lesdits modules entre eux, de manière à rendre le cavalier indémontable.

La mise en place du cavalier assure à la fois le centrage automatique et la liaison mécanique des modules, sans avoir recours à des pions de centrage et à des orifices de positionnement sur les grandes faces latérales accolées.

Les extrémités des pattes de fixation du cavalier sont conformées en crochet coopérant avec les saillies d'encliquetage comprenant deux rebords agencés symétriquement par rapport au plan d'interface à l'intérieur de logements juxtaposés, renfermant des bornes de connexion.

Chaque crochet des pattes de fixation comporte une arête taillée en biseau pour faciliter la mise en place du cavalier sur un épaulement interne du boîtier échelonné, selon la direction d'insertion, entre la rainure et le rebord d'encliquetage correspondant.

Les pattes de fixation du cavalier comportent une partie antérieure rigide proche du talon, ayant des surfaces d'appui parallèles, destinées à enfourcher sans jeu les surfaces conjuguées de l'épaulement en position encliquetée du cavalier, et une partie postérieure élastique autorisant l'expansion des pattes lorsque les crochets se déplacent le long de l'épaulement.

D'autres avantages et caractéristiques ressortiront plus clairement de la description qui va suivre d'un mode de mise en oeuvre de l'invention, donné à titre d'exemple non limitatif et représenté aux dessins annexés, dans lesquels:

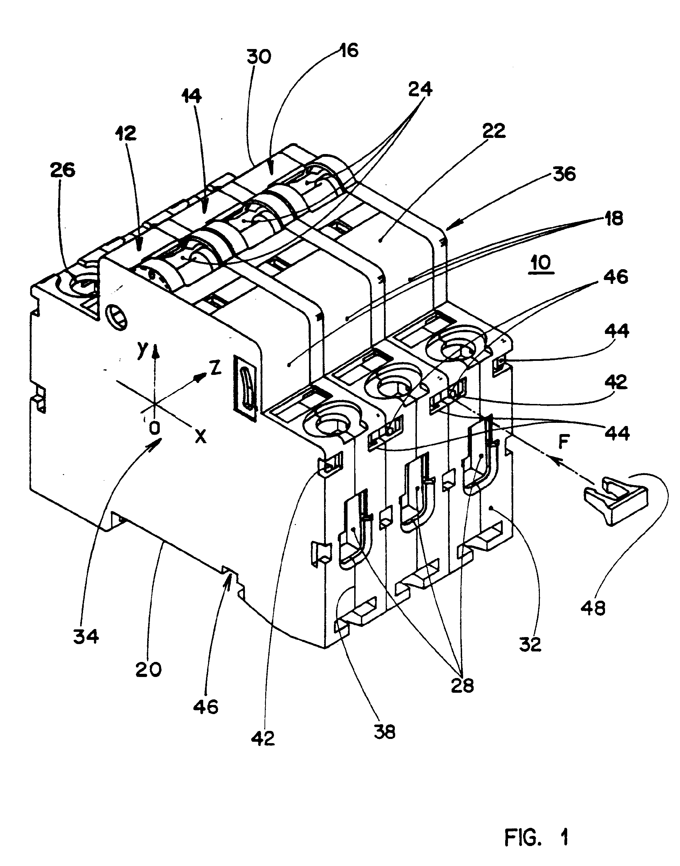

– la figure 1 est une vue en perspective de trois modules d'un disjoncteur triphasé, en cours d'assemblage;

– la figure 2 est une vue partielle en plan de deux modules, avant et après mise en place du cavalier de liaison selon l'invention;

– la figure 3 représente une vue de profil du cavalier selon la figure 2;

– la figure 4 est une vue de côté d'un module.

Sur les figures, un appareil électrique modulaire, notamment un disjoncteur 10 triphasé miniature est formé par l'assemblage côte à côte de plusieurs modules 12,14,16 comprenant chacun un boîtier 18 isolant moulé renfermant les éléments constitutifs d'un pôle de coupure. Les différents modules 12,14,16 accolés et assemblés constituent un bloc multipolaire encliqueté par sa face arrière 20 sur un rail support (non représenté). Chaque module 12,14,16 est équipé sur la face avant 22 d'une manette 24 de commande manuelle, et d'une paire de bornes de connexion 26,28 disposées sur les faces latérales 30,32 étroites et opposées du boîtier 18. Les modules successifs sont accolés par leurs grandes faces latérales 34,36, et peuvent comprendre en plus des blocs interrupteurs unipolaires, des blocs auxiliaires de déclenchement, de signalisation et de commande.

Chaque boîtier 18 isolant d'un pôle de coupure possède un profil stondard, formé par l'association de deux demi-coquilles en U réunies entre elles par des organes de fixation, notamment des rivets métalliques ou des plots en matériau plastique. Le plan de jonction de trace 38 des deux demi-coquilles d'un boîtier 18 est confondu avec le plan médian longitudinal du pôle, et les bornes de connexion 26,28 sont positionnées dans des logements 40 conjugués du boîtier 18. De tels systèmes modulaires sont bien connus des spécialistes, et il est inutile de les décrire plus en détail.

Sur la face latérale étroite 30,32 de chaque boîtier 18 est ménagée une paire d'encoches 42,44 symétriques par rapport au plan médian de trace 38, et agencées au-dessus des bornes 26,28 selon une direction perpendiculaire aux grandes faces 34,36. Chaque encoche 42,44 semi-ouverte s'étend sur une fraction de la largeur d'une demi-coquille, et débouche directement sur la grande face 34,36 correspondante.

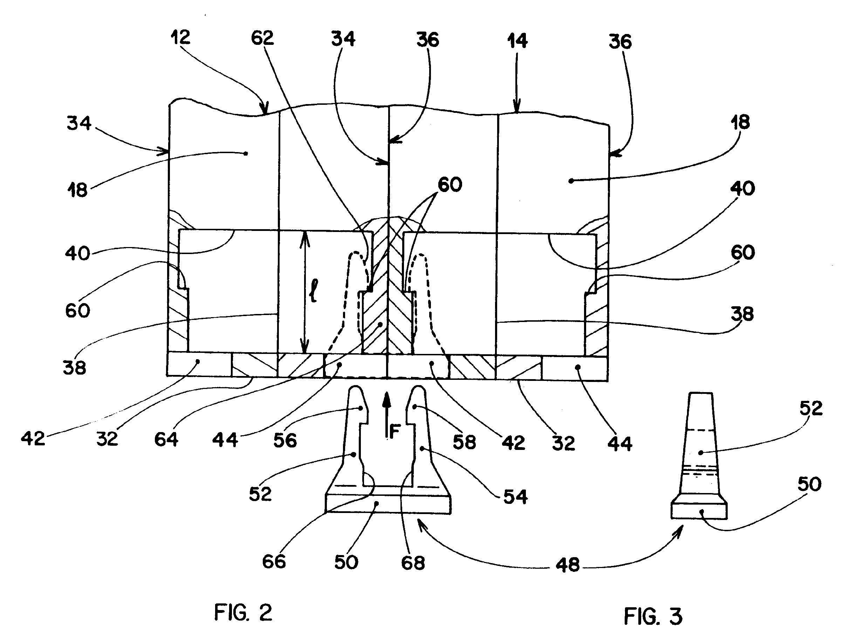

Lors de l'accolement des grandes faces 34,36 de deux modules successifs, les encoches 42,44 conjuguées sont disposées en regard l'une de l'autre pour former une rainure 46 rectangulaire, autorisant l'accès à deux logements 40 internes adjacents (voir figure 2). Chaque rainure 46 est associée à deux faces latérales étroites 30 ou 32, de deux modules juxtaposés, 12,14;14,16, et permet l'introduction selon le sens de la flèche F d'un cavalier 48 d'assemblage desdits modules.

Le cavalier 48 réalisé en matériau isolant plastique présente un profil de fourche ayant un talon 50 de centrage auquel se raccorde une paire de pattes 52,54 de fixation dont les extrémités sont conformées en crochets 56,58 d'encliquetage destinés à coopérer par déformation élastique avec des rebords 60 de retenue, ménagés à l'intérieur des logements 40 dans les parois internes des grandes faces latérales 34,36 accolées. En position insérée du cavalier 40 de liaison, les pattes 52,54 s'accrochent aux rebords 60 en étant symétriques par rapport au plan d'accolement de deux modules 12,14; 14,16, et en étant orientées vers la paroi postérieure des logements 40 selon une direction perpendiculaire aux faces latérales étroites 30,32. La longueur des pattes 52,54 de fixation est inférieure à la profondeur L des logements 40. Le talon 50 présente une forme rectangulaire qui s'adapte dans la rainure 46 conjuguée en assurant le centrage automatique des modules accolés.

Le cavalier 48 possède une fonction double de centrage et de liaison mécanique des modules, et chevauche l'interface entre deux boîtiers 18 accolés.

La première fonction de centrage par le talon 50 est complétée par la deuxième fonction de liaison mécanique au moyen des pattes 52,54. Chaque crochet 56,58 d'encliquetage comporte une arête 62 taillée en biseau pour faciliter l'insertion du cavalier 48 sur le bossage 64 central de la rainure 46. La deuxième fonction de liaison mécanique intervient par l'engagement sans jeu des surfaces d'appui 66,68 parallèles des pattes 52,54 sur les surfaces conjuguées du bossage ou épaulement 64, suivi du verrouillage par les crochets 56,58. La partie antérieure des pattes de fixation 52,54 présente une rigidité le long du talon 50 et des surfaces d'appui 66,68 parallèles, tandis que la diminution de la largeur (voir figure 3) vers le crochet 56,58 confère une élasticité prédéterminée à la partie postérieure autorisant la déformation élastique des pattes 52,54 lors de la mise en place du cavalier 48.

L'utilisation d'un organe isolant de liaison interpolaire permet d'incorporer le cavalier 48 dans le logement 40 des bornes de connexion. En position insérée du cavalier 48, le talon 50 obture la rainure 46, sans faire saillie vers l'extérieur.

Le cavalier 48 de liaison interpolaire est monté imperdable par encliquetage des crochets 56,58, sur les rebords 60 de retenue des boîtiers 18 accolés. L'assemblage des pôles ou modules peut être effectué en usine ou par l'utilisateur, et l'accolement des modules peut intervenir indifféremment sur la grande face latérale 34 de gauche, ou la grande face latérale 36 de droite.

En position insérée dans la rainure 46, chaque cavalier 48 d'assemblage est insaisissable et indémontable par l'utilisateur.

Pour un disjoncteur triphasé à trois modules 12,14,16, deux cavaliers 48 sont nécessaires sur chaque face latérale étroite 30,32. Deux autres cavaliers 48 supplémentaires peuvent encore être introduits dans des rainures 46 ménagées dans les faces arrières 20 des modules.

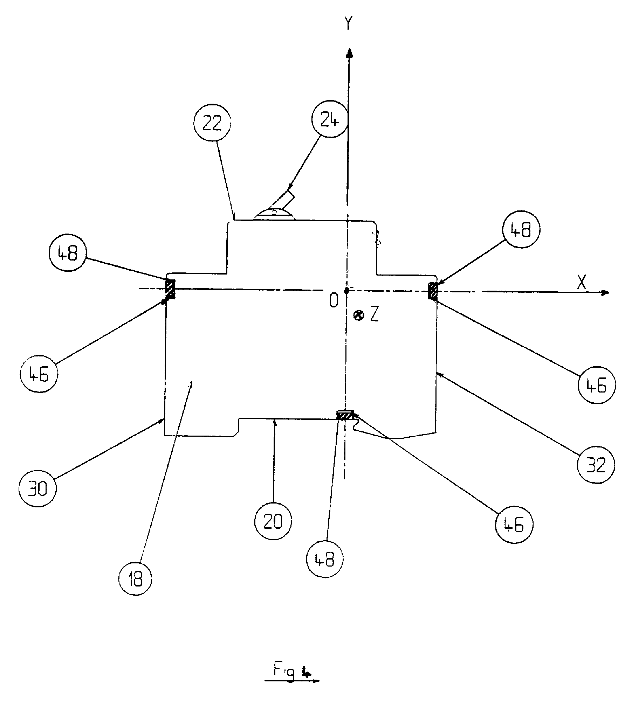

La figure 4 représente le positionnement des cavaliers 48 d'assemblage dans le plan de jonction de deux boîtiers 18 accolés. Les deux cavaliers 48 associés aux faces latérales étroites 30,32 se trouvent alignés selon l'axe x confondu avec la direction longitudinale des modules. Le troisième cavalier 48 situé sur la face arrière 20 des modules est sur l'axe y s'étendant selon la direction de profondeur des modules. L'axe transversal z perpendiculaire aux axes x et y s'étend dans la direction d'accolement des modules. La présence des trois cavaliers 48 d'assemblage dans le plan de jonction de deux boîtiers 18 assure à la fois le maintien sans jeu des modules par immobilisation dans l'axe z, et le centrage des modules entre eux par interdiction de tout déplacement en translation suivant les axes x et y, ainsi que toute rotation autour de l'axe z.

## Revendications

1. Dispositif mécanique d'assemblage d'une pluralité de modules (12,14,16) accolés, à boîtiers (18) isolants moulés de logement d'appareillage électrique, comprenant une pièce de liaison (48) encliquetable en matériau isolant pouvant être insérée dans une glissière (46) de deux boîtiers (18) accolés, pour coopérer par accrochage avec des saillies fixes de retenue, ladite pièce chevauchant en position encliquetée l'interface des deux boîtiers (18), caractérisé en ce que le boîtier (18) de chaque module (12,14,16) comporte une paire d'encoches (42,44) symétriques pour déboucher sur les grandes faces latérales (34,36) opposées du boîtier (18), l'accolement de deux modules (12,14; 14,16) provoquant la venue en regard au niveau de l'interface de deux encoches (42,44) conjuguées pour former une rainure (46) commune constituant ladite glissière, et que la pièce de liaison est agencée en cavalier (48) ayant un talon (50) de centrage susceptible de s'intégrer dans la rainure (46), et une paire de pattes (52,54) de fixation traversant ladite rainure (46) pour verrouiller positivement lesdits modules entre eux, de manière à rendre le cavalier (48) indémontable.

2. Dispositif mécanique d'assemblage selon la revendication 1, caractérisé en ce que les extrémités des pattes (52,54) de fixation du cavalier (48) sont conformées en crochets (56,58) coopérant avec les saillies d'encliquetage comprenant deux rebords (60) agencés symétriquement par rapport au plan d'interface à l'intérieur de logements (40) juxtaposés renfermant des bornes de connexion (26,28), et que la longueur de chaque patte de fixation (52,54) est inférieure à la profondeur du logement (40) correspondant.

3. Dispositif mécanique d'assemblage selon la revendication 2, caractérisé en ce que chaque crochet (56,58) des pattes (52,54) de fixation comporte une arête (62) taillée en biseau pour faciliter la mise en place du cavalier (48) sur un épaulement (64) interne du boîtier (18) échelonné, selon la direction d'insertion entre la rainure (46) et le rebord (60) d'encliquetage correspondant.

4. Dispositif mécanique d'assemblage selon la revendication 3, caractérisé en ce que les pattes de fixation (52,54) du cavalier (48) comportent une partie antérieure rigide proche du talon (50), ayant des surfaces d'appui (66,68) parallèles, destinées à enfourcher sans jeu les surfaces conjuguées de l'épaulement (64) en position encliquetée du cavalier (48), et une partie postérieure élastique autorisant l'expansion des pattes (52,54) lorsque les crochets (56,58) se déplacent le long de l'épaulement (64).

5. Dispositif mécanique d'assemblage selon la revendication 4, caractérisé en ce que la rainure (46) est rectangulaire, et que le talon (50) obture ladite rainure (46) en position encliquetée du cavalier (48) sans faire saillie vers l'extérieur des faces latérales étroites (30,32).

6. Dispositif mécanique d'assemblage selon l'une des revendications 1 à 5, caractérisé en ce que le cavalier (48) présente un profil en fourche.

7. Dispositif mécanique d'assemblage selon l'une des revendications 1 à 6, caractérisé en ce que l'interface de deux boîtiers (18) accolés possède trois cavaliers (48) d'assemblage répartis sur les faces latérales étroites opposées (30,32) et sur la face postérieure (20) à l'opposé des manettes (24) de manière à assurer à la fois le maintien et le centrage des modules dans les trois dimensions.

**Patentansprüche**

1. Mechanische Kupplungsvorrichtung einer Mehrzahl von verbundenen Modulen (12, 14, 16), mit gegossenen Isoliergehäusen (18) zum Unterbringen von elektrischen Geräten, mit einem einrastbaren Verbindungsstück (48) aus Isoliermaterial, das in eine Schiene (46) von zwei verbundenen Gehäusen (18) eingefügt werden kann, um durch Einhängen mit den festen Rückhaltvorsprüngen zusammenzuarbeiten, wobei das genannte Stück in eingerasteter Lage die Trennfläche der zwei Gehäuse (18) überdeckt, dadurch gekennzeichnet, dass das Gehäuse (18) jedes Moduls (12,14,16) ein Paar von symmetrischen Schlitzen (42, 44) aufweist, um auf den grossen gegenüberliegenden Seitenflächen (34, 36) des Gehäuses (18) herauszukommen, wobei die Aneinanderreihung von zwei Modulen (12,14;14,16) bewirkt, dass zwei angrenzende Schlitze (42, 44) auf der Höhe der Trennfläche gegenüberkommen, um eine die genannte Schiene bildende gemeinsame Rille (46) zu bilden, und dass das Verbindungsstück als Reiter (48) ausgebildet ist, mit einer Zentrierungsnase (50), die sich in die Schiene (46) einfügen kann und mit einem Paar Befestigungslaschen (52, 54), die die genannte Schiene (46) durchqueren, um die genannten Module positiv miteinander zu verriegeln, so dass der Reiter (48) unabnehmbar wird.

2. Mechanische Kupplungsvorrichtung gemäss Anspruch 1, dadurch gekennzeichnet, dass die Enden der Befestigungslaschen (52, 54) des Reiters (48) als Haken (56, 58) ausgebildet sind, die mit den Einrastvorsprüngen zusammenarbeiten, die zwei Ränder (60) aufweisen, welche symmetrisch gegenüber der Trennfläche angeordnet sind, im Innern von nebeneinanderliegenden Räumen (40), die Verbindungsklemmen (26, 28) enthalten, und dass die Länge jeder Befestigungslasche (52, 54) kleiner ist als die Tiefe des entsprechenden Raumes (40).

3. Mechanische Kupplungsvorrichtung gemäss Anspruch 2, dadurch gekennzeichnet, dass jeder Haken (56, 58) der Befestigungslaschen (52, 54) eine schräg abgeschnittene Kante (62) aufweist, um das Einsetzen des Reiters (48) auf einem inneren Vorsprung (64) des Gehäuses (18) zu erleichtern, gemäss der Einfügungsrichtung zwischen der Rille (46) und der entsprechenden Einrastkante (60).

4. Mechanische Kupplungsvorrichtung gemäss Anspruch 3, dadurch gekennzeichnet, dass die Befestigungslaschen (52, 54) des Reiters (48) ein vorderes steifes Teil nahe des Rückens (50) aufweisen, mit parallelen Stützoberflächen (66, 68), die dazu bestimmt sind, die zugeordneten Oberflächen des Vorsprungs (64) in der eingerasteten Lage des Reiters (48) ohne Spiel zu umfassen, und ein hinteres elastisches Teil, das die Ausdehnung der Laschen (52, 54) erlaubt, wenn die Haken (56, 58) sich längs des Vorsprungs (64) bewegen.

5. Mechanische Kupplungsvorrichtung gemäss Anspruch 4, dadurch gekennzeichnet, dass die Rille (46) rechteckig ist, und dass der Rücken (50) die genannte Rille (46) in der eingerasteten Lage des Reiters (48) verschliesst, ohne nach aussen auf die engen Seitenflächen (30, 32) vorzuspringen.

6. Mechanische Kupplungsvorrichtung gemäss einem der Ansprüche 1 bis 5, dadurch gekennzeichnet, dass der Reiter (48) ein gabelförmiges Profil aufweist.

7. Mechanische Kupplungsvorrichtung gemäss einem der Ansprüche 1 bis 6, dadurch gekennzeichnet, dass die Trennfläche der beiden verbundenen Gehäuse (18) drei Verbindungsreiter (48) aufweist, die auf den engen gegenüberliegenden Seitenflächen (30, 32) und auf der hinteren Seite (20) gegenüber den Hebeln (24) verteilt sind, um gleichzeitig die Aufrechterhaltung und die Zentrierung der Module in den drei Dimensionen zu gewährleisten.

**Claims**

1. A mechanical assembly device of a plurality of adjoined modules (12, 14, 16), with moulded insulating cases (18) housing electrical switchgear, comprising a clip-on connecting part (48) made of insulating material which can be inserted in a slide (46) of two adjoined cases (18), to cooperate by latching with fixed retaining edges, said part straddling the interface of the two cases (18) in the clipped-on position, characterized in that the case (18) of each module (12, 14, 16) comprises a pair of symmetrical notches (42, 44) which emerge out on the opposite large side faces (34, 36) of the case (18), adjoining two modules (12, 14; 14, 16) causing two conjugate notches (42, 44) to come to face one another at the interface level to form a common groove (46) constituting said slideway, and that the connecting part is arranged as a rider (48) having a centering heel (50) capable of fitting in the groove (46), and a pair of fixing lugs (52, 54) passing through said groove (46) to positively lock said modules together, so as to make the rider (48) unremovable.

2. The mechanical assembly device according to claim 1, characterized in that the ends of the fixing lugs (52, 54) of the rider (48) are shaped as hooks (56, 58) cooperating with the latching protrusions comprising two edges (60) arranged symmetrically with respect to the interface plane inside juxtaposed housings (40), containing connecting terminals (26, 28), and that the length of each fixing lug (52, 54) is smaller than the depth of the corresponding housing (40).

3. The mechanical assembly device according to claim 2, characterized in that each hook (56, 58) of the fixing lugs (52, 54) comprises a bevelled ridge (62) to make it easier to fit the rider (48) on an internal shoulder (64) of the case (18) disposed, in the insertion direction, between the groove (46) and the corresponding latching edge (60).

4. The mechanical assembly device according to claim 3, characterized in that the fixing lugs (52, 54) of the rider (48) comprise a rigid front part close to the heel (50), having parallel bearing surfaces (66, 68), designed to straddle the conjugate surfaces of the shoulder (64) with no clearance in the clipped-on position of the rider (48), and an elastic rear part allowing expansion of the lugs (52, 54) when the hooks (56, 58) move along the shoulder (64).

5. The mechanical assembly device according to claim 4, characterized in that the groove (46) is rectangular, and that the heel (50) blanks off the groove (46) in the clipped-on position of the rider (48) without protruding outwards beyond the narrow side faces (30, 32).

6. The mechanical assembly device according to one of the claim 1 to 5, characterized in that the rider (48) has a fork-shaped outline.

7. The mechanical assembly device according to one of the claim 1 to 6, characterized in that the interface of two adjoined cases (18) has three assembly riders (48) located on the opposite narrow side faces (30, 32) and on the rear face (20) opposite the handles (24) in such a way as to ensure that the modules are both secured and centered in all three dimensions.

FIG. 1

EP 0 310 474 B1

FIG. 2

FIG. 3

Fig 4